(19) Europäisches Patentamt
European Patent Office
Office européen des brevets

(11) **EP 4 468 147 A1**

(12) **EUROPEAN PATENT APPLICATION**
published in accordance with Art. 153(4) EPC

(43) Date of publication:
**27.11.2024 Bulletin 2024/48**

(21) Application number: **22921428.3**

(22) Date of filing: **30.06.2022**

(51) International Patent Classification (IPC):
**G06F 9/445** (2018.01)

(52) Cooperative Patent Classification (CPC):
Y02D 10/00

(86) International application number:
**PCT/CN2022/103136**

(87) International publication number:
**WO 2023/137997 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2022 CN 202210065862**

(71) Applicants:
• China Nuclear Power Engineering Co., Ltd.
  Shenzhen, Guangdong 518124 (CN)
• China Nuclear Power Design Company Ltd.
  (Shenzhen)
  Shenzhen, Guangdong 518100 (CN)

• China General Nuclear Power Corporation
  Shenzhen, Guangdong 518026 (CN)
• CGN Power Co., Ltd.
  Shenzhen, Guangdong 518026 (CN)

(72) Inventors:
• ZHAO, Dong
  Shenzhen, Guangdong 518124 (CN)
• JING, Xiaodong
  Shenzhen, Guangdong 518124 (CN)

(74) Representative: Westphal, Mussgnug & Partner,
Patentanwälte mbB
Werinherstraße 79
81541 München (DE)

(54) **DESIGN SOFTWARE CALLING METHOD AND APPARATUS, COMPUTER DEVICE, AND STORAGE MEDIUM**

(57)     A design software calling method and apparatus, a computer device and a storage medium, the method comprises: receiving calling information for design software(101); according to the calling information, starting a software starting engine(102); generating an executable file by means of the software starting engine(103); and according to the executable file, calling corresponding design software. Unified management and scheduling of design-related analysis software on a local computer or a remote server (including a high-performance computing platform) are realized, thus solving the problem that there are many types of design software and it is difficult for a user to find software; the software starting engine, as a jump, implemented by means of a configuration file mode, so that the calling applicability of the design software in a local computer or a server is improved.

FIG. 1

- Receiving calling information for design software; — 101
- Starting a software startup engine according to the calling information; — 102
- Generating an executable file by means of the software startup engine; — 103
- Calling corresponding design software according to the executable file. — 104

EP 4 468 147 A1

**Description**

TECHNICAL FIELD

The invention relates to the technical field of computer software, in particular to a design software calling method, a design software calling apparatus, a computer device and a storage medium.

DESCRIPTION OF RELATED ART

With the rapid development of digital design technology, design software has been widely used in various nuclear power design activities, playing an important role, greatly improving the design efficiency. However, at present, all kinds of design activities are still in the stage of tool application, design input/output data and process data lack centralized storage, design activities lack effective management and control, and data transmission between design activities lacks standardized management. Among them, the unified management and call of design software is the key process in the standardized management and control of design activities. In some design activities, designers call local software to carry out design, and in some design activities, they call software on remote servers (high-performance computing servers or technology transfer servers) to carry out design, and the use of various design software is complex. The installation path varies greatly in different environments, all of which bring many difficulties to the unified management and control of design software.

In the existing software calling methods, the common way is to start the local CMD command through the web page, realize the function of the web page starting the local software, pass in a specific software path, and open the designated design software of the user client. However, this method is not flexible. When calling local software, it needs to transmit the software installation path to the CMD command. However, the software installation path of different clients is different, and only the local design software of the user client can be called, so the versatility is low.

BRIEF SUMMARY OF THE INVENTION

In view of the above problems, the present invention is provided in order to provide a design software calling method, a design software calling apparatus, a computer device and a storage medium which overcome or at least partially solve the above problems.

The invention discloses a calling method of a design software, comprising:

Receiving calling information for design software;
Starting a software startup engine according to the calling information;
Generating an executable file by means of the software startup engine;
Calling corresponding design software according to the executable file.

Preferably, the receiving calling information for design software comprises:
Receiving design software name, software host internet protocol address and input information for the design software.

Preferably, the starting a software startup engine according to the calling information, comprises:
Sending the design software name, software host Internet protocol address and input information to the software startup engine through security shell protocol channel, and starting the software startup engine.

Preferably, the software startup engine comprises a configuration file, the configuration comprises configuration information corresponding to a plurality of design software; the generating an executable file by means of the software startup engine, comprises:

Calling corresponding configuration file according to the design software name;
Generating an executable file based on the configuration file and the input information

Preferably, the generating an executable file based on the configuration file and the input information, comprises:

Receiving the input information in a configuration file and outputting a corresponding design software execution command to a specific file;
Converting the specific file into an executable file.

Preferably, the configuration information includes software path and/or a method of execution commands and/or receiving parameter.

Preferably, the method further comprises: configuring the software startup engine on a local computer and a server.

The invention also discloses a design software calling apparatus, comprising:

A calling information receiving module for receiving calling information for design software;
A starting module for starting a software startup engine according to the calling information;
An executable file generation module for generating an executable file by means of the software startup engine;
A design software calling module for calling corresponding design software according to the executable file.

Preferably, the calling information receiving module comprises:
an information receiving sub-module for receiving the design software name, the software host Internet protocol address and the input information for the design software.

Preferably, the starting module comprises:
a starting sub-module for sending the design software name, the software host Internet protocol address and the input information to the software startup engine through the Security Shell protocol channel, and starting the software startup engine.

Preferably, the software startup engine comprises a configuration file, the configuration file comprises configuration information corresponding to various design software; The executable file generation module comprises:

a configuration file calling sub-module for calling the corresponding configuration file according to the design software name;
an executable file generation sub-module for generating the executable file according to the configuration file and the input information.

Preferably, the executable file generation sub-module comprises:

A specific file output unit for receiving the input information in the configuration file and outputting a corresponding design software execution command to the specific file;
A converting unit for converting the specific file into an executable file.

Preferably, the configuration information includes software path and/or a method of executing command and/or receiving parameter.

Preferably, the apparatus further comprises a configuration module for configuring the software startup engine on a local computer and a server.

The invention also discloses a computer device, comprising a memory and a processor, wherein the memory stores a computer program, and the processor implements the steps of the design software calling method when executing the computer program.

The invention also discloses a computer readable storage medium, on which a computer program is stored, and when the computer program is executed by a processor, a step of realizing the design software calling method is realized.

The beneficial effects of the present invention are:
In the invention, the design software calling method comprises: receiving calling information for design software; Starting a software startup engine according to the calling information; Generating an executable file by means of the software startup engine; Calling corresponding design software according to the executable file; Unified management and scheduling of design-related analysis software on a local computer or a remote server (including a high-performance computing platform) are realized, thus solving the problem that there are many types of design software and it is difficult for a user to find software; the software startup engine, as a jump, implemented by means of a configuration file mode, so that the calling applicability of the design software in a local computer or a server is improved.

BRIEF DESCRIPTION OF THE SEVERAL VIEWS OF THE DRAWINGS

In order to explain more clearly the technical scheme of the present invention, the drawings required to be used in the description of embodiments will be briefly described below. Obviously, the drawings in the description below are only some embodiments of the present invention, and other drawings can be obtained from these drawings for those of ordinary skill in the art without exerting creative effort.

FIG 1 is a step flow chart of an embodiment of a design software calling method of the present invention;
FIG 2 is a flow diagram of a calling information receiving step of the present invention;
FIG 3 is a flow diagram of a software startup engine starting step according to the present invention;
FIG 4 is a flow diagram of an executable file generating step of the present invention;

FIG 5 is a flow diagram of an executable file conversion step according to the present invention;
FIG 6 is a module diagram of the present invention;
FIG 7 is a user interface diagram of a client according to the present invention;
FIG 8 is a block diagram of an embodiment of a design software calling apparatus of the present invention;
FIG 9 is an internal configuration diagram of a computer device according to one embodiment.

DETAILED DESCRIPTION OF THE INVENTION

In order to make the technical problems, technical proposals and beneficial effects solved by the present invention more clear, the present invention will be further described in detail in combination with the accompanying drawings and embodiments below. It should be understood that the particular embodiments described herein are intended only to explain the present invention and not to qualify the present invention.

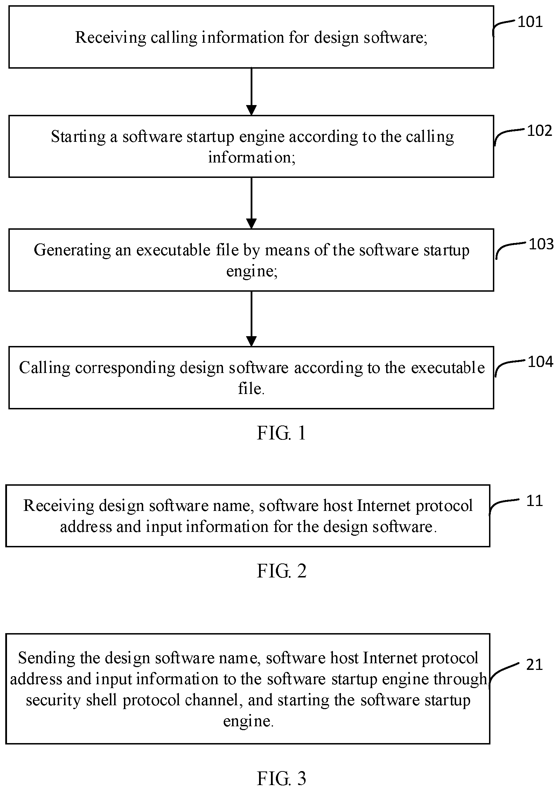

Referring to FIG 1, there is shown a step flow chart of an embodiment of a design software calling method of the present invention; which may include the following steps:

Step 101, receiving call information for design software;
In the invention, the design software can be installed on a local computer and/or a server, and the execution body of the design software calling method of the invention can be executed by the local computer or the server alone, or part of the steps can be executed by the local computer and part of the steps can be executed by the server connected with the local computer, that is, the local computer can be connected with the server, and the two can transmit information to each other. For example, the local computer can receive the calling information for the design software and send the calling information to the server.

In particular, the local computer may include a personal computer, a notebook computer, a tablet computer, etc., and the server may include an independent server or a server cluster composed of a plurality of servers, the present invention does not impose excessive limitations on this.

The invention is not unduly restrictive to the type of design software which may include a variety of large design applications, such as nuclear power applications.

Further, the calling information may be a variety of information about the design software, such as the name of the design software, the Internet protocol address of the software host (i.e., the IP address of the host), and input information, etc. Of course, it may also include information about other design software, which is not too limited by the present invention.

Step 102, starting a software startup engine according to the calling information;
Further, after receiving the call information, a software startup engine is started by the calling information. It is to be noted that the software startup engine may be a configuration module configured with detailed information of each design software in different local computers or servers, and the starting of the design software installed in different devices is realized by the software startup engine as a jump; The software stating engine can be pre-installed on the local computer and/or server for ease of use.

The detailed information of the software startup engine may include a software path, an execution command, a receiving parameter mode, etc. The detailed information may be a variety of information obtained by a skilled person in the art according to the actual situation, and the invention does not make excessive restrictions thereon.

In the invention, the software startup engine can be started according to the calling information, that is, the calling information is inputted into the software startup engine. Specifically, the design software name, the Internet protocol address of the software host computer and the input information can be inputted into the software startup engine.

Step 103, generating an executable file by means of the software startup engine;
After the software startup engine is started, the executable file can be generated by the software startup engine. Specifically, the software startup engine can obtain the design software name from the calling information, select the corresponding configuration information of the design software based on the design software name, and execute it to generate an executable file.

Step 104, calling corresponding design software according to the executable file.

After the executable file is obtained, corresponding design software can be run according to the executable file. Specifically, the corresponding design software can be called in the remote server according to the executable file, and the corresponding design software can be called in the local computer according to the executable file.

In the invention, the design software calling method comprises: receiving calling information for the design software; Starting a software startup engine according to the calling information; Generating an executable file by means of the software startup engine; Calling corresponding design software according to the executable file; Realized the unified management and scheduling of design-related analysis software for a local computer or a remote server (including a high-performance computing platform), and solved the problem that there are many types of design software and it is difficult for users to find software; Realized the mode of designing software starting through the software startup engine as a jump; In the software startup engine, the management and execution of the design software are realized by means of the configuration file, which improves the applicability of the design software in the local computer or server.

In one embodiment, referring to FIG 2, a flow diagram of a calling information receiving step of the present invention is shown, comprises:

Step 11: Receiving design software name, software host Internet protocol address and input information for the design software.

In the invention, the calling information includes the design software name, the software host Internet protocol address and the input information, etc, and the input information includes an input file and an input parameter, etc.

In one embodiment, an input box or a click box can be displayed in the client interface, and information such as a design software name, a software host Internet protocol address and input information for the design software input by a user can be received through the client interface; The software host Internet Protocol address is the IP address of the local computer or server where the design software is installed.

In one embodiment, referring to FIG 3, a flow diagram of a software startup engine starting step of the present invention is shown, comprises:

Step 21, sending the design software name, software host Internet protocol address and input information to the software startup engine through security shell protocol channel, and starting the software startup engine.

Further, the Secure Shell protocol channel is located between a client and a local computer or server. The Secure Shell protocol (SSH, Secure Shell) is an encrypted network transport protocol that can provide a secure transport environment for network services in an insecure network. SSH enables the connection between an SSH client and a server (or a local computer) by establishing a secure tunnel in the network.

It should be noted that the key-free verification setting can be carried out for the security shell protocol channel between a client and a local computer or server installed by the design software, so that the information transmission chain between the two is safe and reliable, and the unified management and scheduling of the software related to the design of the local or remote server is realized.

After the key-free verification setting is completed, the design software name, software host Internet protocol address and input information are sent to the software startup engine through the security shell protocol channel, and the software startup engine is started.

It can execute the SSH protocol of the client by calling the CMD mode of the client through the web page, connect to the local computer or server where the design software is located, and execute the software staring engine in the local computer or server through the SSH protocol.

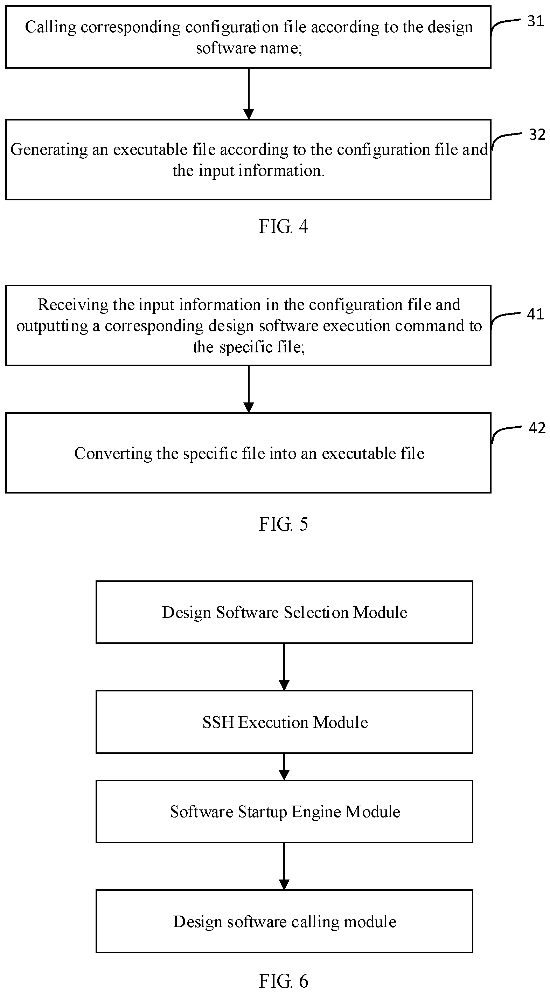

In one embodiment, referring to FIG 4, a flow diagram of an executable file generating step of the present invention is shown, comprises:

Step 31: Calling corresponding configuration file according to the design software name;
Step 32: Generating an executable file according to the configuration file and the input information.

Specifically, the software startup engine comprises a configuration file, wherein the configuration file comprises configuration information corresponding to a plurality of design software; First, the configuration file corresponding to the software startup engine can be called according to the design software name; Then according to the configuration file and input information, an executable file is generated.

In one embodiment, referring to FIG 5, a flow diagram of an executable file conversion step of the present invention is shown, comprises:

Step 41, receiving the input information in the configuration file and outputting a corresponding design software execution command to the specific file;
Step 42, converting the specific file into an executable file.

Specifically, the input information may be received in a configuration file, a corresponding design software execution command may be output to a specific file, the specific file may be a file runpbs.sh, and the file runpbs.sh may be converted into an executable file.

In order to enable those skilled in the art to better understand the present invention, the following is explained by one specific example:

In one embodiment, the technical proposal of the invention is divided into four modules: a design software selection module, an SSH execution module, a software startup engine module and a design software calling module, and the relationship of each module is shown in FIG 6.

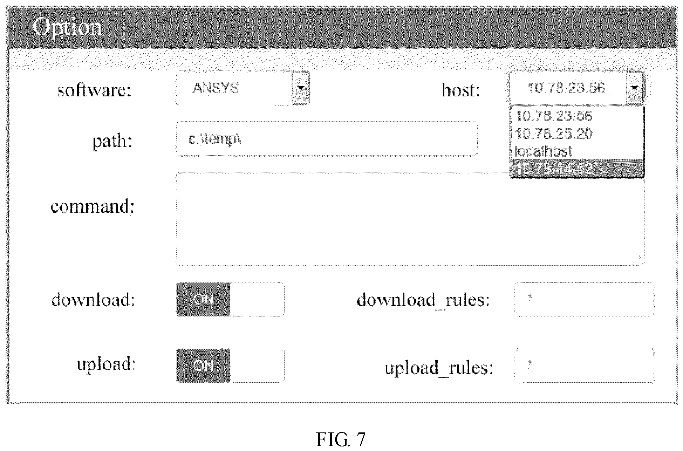

Design Software Selection Module: The module provides an interface for a designer to select design software. The designer selects the name of the design software to be called and the host where the software is located (i.e. local computer or server) in the module, and at the same time uploads the input file of the selected design software and sets the input parameters of the design software. Referring to FIG 7, a user interface diagram of a client of the invention is shown. The designer can select the name of the design software to be called and the host where the software is located in the user interface, or input other information.

SSH Execution Module: Before the module is executed, in order to successfully call the design software, it is necessary to configure the SSH key-free verification between a client and a host where the design software is located in advance. The module receives software host information of the design software selection module. The SSH protocol of the client is executed through the CMD mode of the web page calling the client software, and connected to the host where the design software is located, and the software startup engine in the host is executed through the SSH protocol. The engine is installed as special software on individual computing software servers or local computers. When executing the software startup engine, the SSH execution module simultaneously transmits the software name, input file and input parameter of the design software selection module into the software startup engine module; It should be noted that a client refers to a invocation parameter configuration component or module installed on a local computer or server.

Software Startup Engine Module: The module is the software startup engine software of the invention, and the module is configured with detailed information on various design software on different local computers or servers, including software path, execution command, receiving parameter mode, etc. The associated configuration information may be configured in advance. The software startup engine module receives the design software name of the SSH execution module, selects the configuration information of the corresponding software according to the name and executes. In the configuration files of each design software, after receiving the input file name and input parameter, output the execution command of the design software to a file, and converted the file into an executable file, and then execute the executable file. The configuration file is an important part of this module, and its format example is as follows (Using Groovy language as an example, the following code is only one example of the present invention, and the same effect can be achieved through other codes.):

> 1. Defining the execution command of the design software as a variable, and the following example code defines the ANSYS execution command as a variable ANSYS _ script.

```
def ansys_script = """'
COM_FILE=${pbs_com_file}
LOG_FILE=run.log
ansys121=/hptc_cluster/ansys_v121/ansys_inc/v121/ansys/bin/ansys121
cd \$PBS_O_WORKDIR
export MPI_WORKDIR=\$PBS_O_WORKDIRs
nodes=\$(uniq -c \$PBS_NODEFILE | awk '{printf ":"\$2":"\$1}')
\$ansys121 -dis -b -machines \${nodes: 1} -i \$COM_FILE >& \$LOG_FILE
rm host.list
"""
```

> 2. Generate the file runpbs.sh, output a command variables to the file, and converted the file into an executable file, such as:

```
File scriptFile = new File("runpbs.sh");
scriptFile.withPrintWriter { writer ->
writer.print(ansys_script);
}
scriptFile.setExecutable(true, true);
```

> 3. Executing an executable file such as:

$$def\ pbsCmd = ["qsub", "runpbs.sh"]$$

$$def\ pbsProc = pbsCmd.execute();$$

Design software calling module: The corresponding design software can be started by executing the executable file generated in the software startup engine module.

It is to be noted that, for the sake of simplicity of description, the method embodiments are all described as a series of action combinations, but those skilled in the art will be aware that the present invention is not limited by the described order of action, since according to the present invention, certain steps may be performed in other order or at the same time. Secondly, one skilled in the art will also be aware that the embodiments described in the specification are all preferred embodiments, and the actions involved are not necessarily required by the present invention.

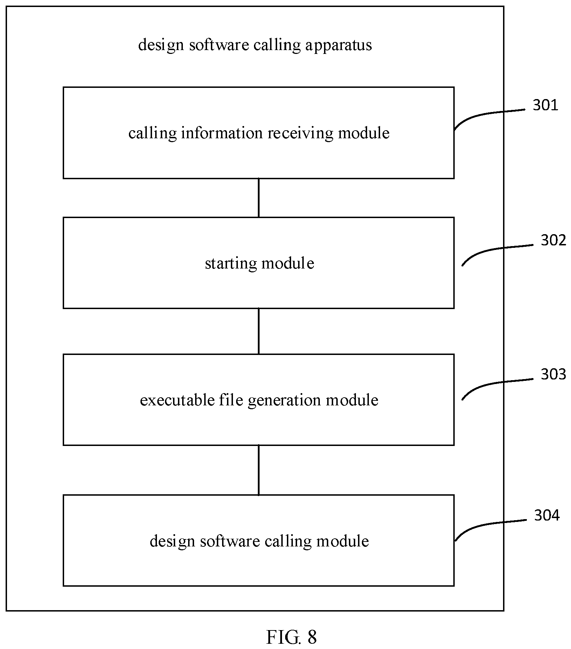

Referring to FIG 8, there is shown a block diagram of an embodiment of a design software calling apparatus of the present invention, which may include the following modules:

A calling information receiving module 301 for receiving calling information for design software;

A starting module 302 for starting a software startup engine according to the calling information;

An executable file generation module 303 for generating an executable file by means of the software startup engine;

A design software calling module 304 for calling corresponding design software according to the executable file.

Preferably, the calling information receiving module comprises:

an information receiving sub-module for receiving the design software name, the software host Internet protocol address and the input information for the design software.

Preferably, the starting module comprises:

a starting sub-module for sending the design software name, the software host Internet protocol address and the input information to the software startup engine through the security shell protocol channel, and starting the software startup engine.

Preferably, the software startup engine comprises a configuration file, the configuration file comprises configuration information corresponding to a plurality of design software; The executable file generation module comprises:

a configuration file calling sub-module for calling the corresponding configuration file according to the design software name;

an executable file generation sub-module for generating the executable file according to the configuration file and the input information.

Preferably, the executable file generation sub-module comprises:

A specific file output unit for receiving the input information in the configuration file and outputting a corresponding design software execution command to the specific file;

A converting unit for converting the specific file into an executable file.

Preferably, the configuration information includes software path and/or a mode of executing command and/or receiving parameter.

Preferably, the apparatus further comprises a configuration module for configuring the software startup engine on a local computer and a server.

Each module in the design software calling apparatus can be realized in whole or in part by software, hardware and a combination thereof. The modules can be embedded in or independent of the processor in a computer equipment in the form of hardware, or stored in a memory in the computer equipment in the form of software, so that the processor can call and execute the operations corresponding to the modules. The design software calling apparatus provided above can be used to execute the design software calling method provided in any of the embodiments, and has corresponding functions and beneficial effects.

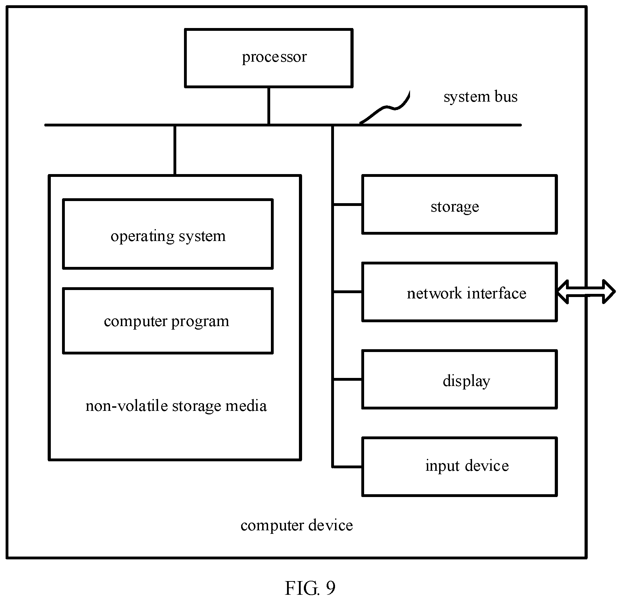

In one embodiment, there is provided a computer device which may be a terminal or a server, or a system consisting of a terminal and a server, and an internal structure diagram thereof may be shown in FIG 9. The computer device includes a processor, a memory, a network interface, a display screen, and an input device connected via a system bus. Wherein the processor of the computer device is used to provide computing and control capabilities. The memory of the computer device includes a non-volatile storage medium and an internal memory. The non-volatile storage medium stores an operating system and a computer program. The internal memory provides an environment for the operation of an operating system and computer programs in a non-volatile storage medium. The network interface of the computer device is used for communicating with an external terminal through a network connection. The computer program is executed by the processor to implement a method of invoking design software. The display screen of the computer device can be a liquid crystal display screen or an electronic ink display screen, and the input device of the computer device can be a touch layer covered on the display screen, a key, a trackball or a touchpad arranged on the shell of the computer device, and an external keyboard, a touchpad or a mouse.

Those skilled in the art will understand that the structure shown in FIG 9 is only a block diagram of a portion of the structure associated with the present application, and does not constitute a limitation on the computer device to which the present application is applied, which may include more or fewer components than shown in the figures, or combine certain components, or have different component arrangements.

In one embodiment, there is provided a computer device comprising a memory in which a computer program is stored and a processor which executes the computer program implementing the steps of the embodiments of FIGS. 1 to 5.

In one embodiment, there is provided a computer readable storage medium on which a computer program is stored, and when executed by a processor, the computer program implements the steps of the embodiments of FIGS. 1 to 5 .

Each embodiment in this specification is described in a progressive manner, each embodiment highlights the differences from other embodiments, and the same and similar parts between the embodiments can be referred to each other.

Those skilled in the art will appreciate that embodiments of the present invention may be provided as methods, devices, or computer program products. Accordingly, the present invention may take the form of full hardware embodiments, full software embodiments, or embodiments combining software and hardware aspects. Further, the present invention may take the form of a computer program product implemented on one or more computer usable storage media (including, but not limited to, disk storage, CD-ROM, optical storage, etc.) containing computer usable program code.

The present invention is described with reference to flow diagrams and/or block diagrams of methods, terminal devices (systems), and computer program products according to the present invention. It is understood that each of the processes and/or boxes in the flowcharts and/or block diagrams and the combination of the processes and/or boxes in the flowcharts and/or block diagrams may be implemented by computer program instructions. These computer program instructions may be provided to a processor of a general purpose computer, a special purpose computer, an embedded processor, or other programmable data processing terminal device to generate a machine such that the instructions executed by the processor of the computer or other programmable data processing terminal device generate means for implementing functions specified in a flow chart one or more flows and/or a block diagram one or more boxes.

These computer program instructions may also be stored in a computer readable memory capable of directing a computer or other programmable data processing terminal device to operate in a particular manner such that the instructions stored in the computer readable memory produce a manufactured product comprising instruction means that implement functions specified in a flow chart one or more flows and/or a block diagram one or more boxes.

These computer program instructions may also be loaded on a computer or other programmable data processing terminal device such that a series of operational steps are performed on the computer or other programmable terminal device to generate computer-implemented processes such that the instructions executed on the computer or other programmable terminal device provide steps for implementing functions specified in a flow chart one or more flows and/or a box or boxes of a block diagram.

While preferred embodiments of the present invention have been described, further changes and modifications to these embodiments may be made by those skilled in the art once the basic creative concepts are known. The appended claims are therefore intended to be construed as comprising preferred embodiments and all modifications and modifications falling within the scope of the present invention.

Finally, it should also be noted that, in this context, relational terms such as first and second are used only to distinguish one entity or operation from another, and do not necessarily require or imply any such actual relationship or order between these entities or operations. Moreover, the terms "include", "comprise" or any other variation thereof are intended to cover non-exclusive inclusion, so that a process, method, article or terminal device that includes a set of elements includes not only those elements, but also other elements that are not expressly listed, or that are inherent in such a process, method, article or terminal device. Without further limitation, an element qualified by the phrase "includes a..." does not exclude the existence of another identical element in the process, method, article or terminal device in which the element is included.

The invention provides a design software calling method, design software calling apparatus, a computer equipment and a storage medium, which are described in detail. The principle and implementation mode of the invention are described in this paper by applying specific examples, and the above embodiment is only used to help understand the method and the core idea of the invention; At the same time, for those skilled in the art, according to the idea of the present invention, there will be changes in the specific implementation mode and application scope. In summary, the content of this specification should not be understood as a limitation of the present invention.

**Claims**

1. A calling design software method, comprises:

   receiving calling information for design software;
   starting a software startup engine according to the calling information;
   generating an executable file by means of the software startup engine;
   calling corresponding design software according to the executable file.

2. The design software calling method according to claim 1, wherein the receiving of calling information for design software comprises:
   receiving design software name, software host Internet protocol address and input information for the design software.

3. The design software calling method according to claim 2, wherein the starting a software startup engine according to the calling information, comprises:
sending the design software name, the software host Internet protocol address and the input information to the software startup engine through secure shell protocol channel, and starting the software startup engine.

4. The design software calling method according to claim 2, wherein the software startup engine comprises a configuration file, which includes configuration information corresponding to multiple design software; the generating an executable file by means of the software startup engine, comprises:

calling corresponding configuration file according to the design software name;
generating an executable file based on the configuration file and input information.

5. The design software calling method according to claim 4, wherein the generating an executable file based on the configuration file and the input information, comprises:

receiving the input information in a configuration file and outputting a corresponding design software execution command to a specific file;
converting the specific file into an executable file.

6. The design software calling method according to claim 4, wherein the configuration information includes a software path and/or a method of executing command and/or receiving parameter.

7. The design software calling method according to claim 1, wherein the method further comprises:
configuring the software startup engine on a local computer and a server.

8. A design software calling apparatus, wherein it comprises:

a calling information receiving module for receiving calling information for design software;
a starting module for starting a software startup engine according to the calling information;
an executable file generation module for generating an executable files by means of the software startup engine;
a design software calling module for calling corresponding design software according to the executable file.

9. The design software calling apparatus according to claim 8, wherein the calling information receiving module comprises:
an information receiving sub-module for receiving the design software name, software host Internet protocol address and input information for the design software.

10. The design software calling apparatus according to claim 9, wherein the starting module comprises:
a starting sub-module for sending the design software name, the software host Internet protocol address and the input information to the software startup engine through the secure shell protocol channel, and starting the software startup engine.

11. The design software calling apparatus according to claim 9, wherein the software startup engine comprises a configuration file, which includes configuration information corresponding to various design software; the executable file generation module comprises:

a configuration file calling sub-module for calling the corresponding configuration file according to the design software name;
an executable file generation sub-module for generating the executable file based on the configuration file and input information.

12. The design software calling apparatus according to claim 11, wherein the executable file generation sub-module comprises:

a specific file output unit for receiving the input information in the configuration file and outputting a corresponding design software execution command to the specific file;

a converting unit for converting the specific file into an executable file.

13. The design software calling apparatus according to claim 11, wherein the configuration information includes a software path and/or a method of executing command and/or receiving parameter.

14. The design software calling apparatus according to claim 8, wherein the apparatus further comprises:
a configuration module for configuring the software startup engine on a local computer and a server.

15. A computer device comprising a memory and a processor, wherein the memory stores a computer program, wherein when the processor executes the computer program, it implements the steps of calling the design software according to any one of claims 1 to 7.

16. A computer-readable storage medium storing a computer program, wherein when the computer program is executed by a processor, the steps of implementing the call method of the design software as claimed in any one of claims 1 to 7 are implemented.

| Receiving calling information for design software; | ⌐101 |

↓

| Starting a software startup engine according to the calling information; | ⌐102 |

↓

| Generating an executable file by means of the software startup engine; | ⌐103 |

↓

| Calling corresponding design software according to the executable file. | ⌐104 |

FIG. 1

| Receiving design software name, software host Internet protocol address and input information for the design software. | ⌐11 |

FIG. 2

| Sending the design software name, software host Internet protocol address and input information to the software startup engine through security shell protocol channel, and starting the software startup engine. | ⌐21 |

FIG. 3

Calling corresponding configuration file according to the design software name; ⌐ 31

↓

Generating an executable file according to the configuration file and the input information. ⌐ 32

FIG. 4

Receiving the input information in the configuration file and outputting a corresponding design software execution command to the specific file; ⌐ 41

↓

Converting the specific file into an executable file ⌐ 42

FIG. 5

Design Software Selection Module

↓

SSH Execution Module

↓

Software Startup Engine Module

↓

Design software calling module

FIG. 6

FIG. 7

design software calling apparatus

calling information receiving module — 301

starting module — 302

executable file generation module — 303

design software calling module — 304

FIG. 8

FIG. 9

## INTERNATIONAL SEARCH REPORT

| International application No. |
| --- |
| **PCT/CN2022/103136** |

**A. CLASSIFICATION OF SUBJECT MATTER**

G06F 9/445(2018.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 设计, 软件, 调用, 算法, 启动引擎, 名称, 本地, 远程, 跳转, 可执行文件, 地址, 路径, 查找, design, software, call, algorithm, start engine, name, local, remote, jump, executable, address, path, search

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114489850 A (CHINA NUCLEAR POWER ENGINEERING CO., LTD. et al.) 13 May 2022 (2022-05-13)<br>claims 1-16 | 1-16 |
| X | CN 112965794 A (XI'AN ZHIZHOU SHENJIAN INFORMATION TECHNOLOGY GROUP CO., LTD.) 15 June 2021 (2021-06-15)<br>description, paragraphs [0004]-[0012] and [0048]-[0056] | 1-16 |
| A | CN 108804158 A (ZHUHAI MEIZU TECHNOLOGY CO., LTD.) 13 November 2018 (2018-11-13)<br>entire document | 1-16 |
| A | CN 112988409 A (TENCENT TECHNOLOGY SHENZHEN CO., LTD.) 18 June 2021 (2021-06-18)<br>entire document | 1-16 |
| A | CN 107179951 A (BEIJING JINGDONG SHANGKE INFORMATION TECHNOLOGY CO., LTD. et al.) 19 September 2017 (2017-09-19)<br>entire document | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 October 2022** | **19 October 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/103136**

**C.    DOCUMENTS CONSIDERED TO BE RELEVANT**

| Category* | Citation of document, with indication, where appropriate, of the relevant passages | Relevant to claim No. |
|---|---|---|
| A | US 2018210768 A1 (INTERNATIONAL BUSINESS MACHINES CORP.) 26 July 2018 (2018-07-26) <br> entire document | 1-16 |

Form PCT/ISA/210 (second sheet) (January 2015)

**INTERNATIONAL SEARCH REPORT**
Information on patent family members

| International application No. |
|---|
| **PCT/CN2022/103136** |

| Patent document cited in search report | | | Publication date (day/month/year) | Patent family member(s) | Publication date (day/month/year) |
|---|---|---|---|---|---|
| CN | 114489850 | A | 13 May 2022 | None | |
| CN | 112965794 | A | 15 June 2021 | None | |
| CN | 108804158 | A | 13 November 2018 | None | |
| CN | 112988409 | A | 18 June 2021 | None | |
| CN | 107179951 | A | 19 September 2017 | None | |
| US | 2018210768 | A1 | 26 July 2018 | None | |

Form PCT/ISA/210 (patent family annex) (January 2015)